# EUROPEAN PATENT SPECIFICATION

(11) **EP 1 866 378 B1**
(45) Date of publication and mention of the grant of the patent: **18.03.2009**
(21) Application number: 06749194.4
(22) Date of filing: 04.04.2006
(51) Int. Cl.: C08L 95/00

(54) **BLENDS OF STYRENE BUTADIENE COPOLYMERS WITH ETHYLENE ACRYLATE COPOLYMERS AND ETHYLENE BASED WAX FOR ASPHALT MODIFICATION**
GEMISCHE AUS STYROL-BUTADIEN-COPOLYMEREN UND ETHYLEN-ACRYLAT-COPOLYMEREN SOWIE WACHS AUF ETHYLENBASIS ZUR ASPHALTMODIFIZIERUNG
MELANGES DE COPOLYMERES DE STYRENE BUTADIENE AVEC DES COPOLYMERES D' ETHYLENE ACRYLATE ET DE LA CIRE A BASE D' ETHYLENE POUR LA MODIFICATION D' ASPHALTE

(30) Priority: 04.04.2005 US 668043 P; 04.04.2005 US 668118 P; 04.04.2005 US 668155 P
(43) Date of publication of application: 19.12.2007
(73) Proprietor: E.I. DU PONT DE NEMOURS AND COMPANY, Wilmington, DE 19898 (US)
(72) Inventor: PREJEAN, George, Wyatt, Orange, Texas 77632 (US); BABCOCK, Gregg, Byron, Wilmington, Delaware 19808 (US); BOULDIN, Mark, Fair Oaks Ranch, Texas 78015 (US)
(74) Representative: Heinemann, Monica
(86) International application number: PCT/US2006/012400
(87) International publication number: WO 2006/107908

(56) References cited:
- WO-A-03/029377
- WO-A-20/04090043
- WO-A-20/04111130
- US-A- 5 331 028
- E.I. DUPONT DE NEMOURS AND COMPANY: "DuPont Elvaloy RET"[Online] 2002, pages 1-3, XP002391421 Retrieved from the Internet: URL:http://www.dupont.com/asphalt> [retrieved on 2006-07-20]
- J.A. JIRAK AND R. STATZ: "DuPont Elvaloy, reactive elastomeric terpolymer (TER): Road Evaluation Report"[Online] 14 October 2000 (2000-10-14), XP002391422 Retrieved from the Internet: URL:http://www.dupont.com/asphalt/oregon.p df> [retrieved on 2006-07-20]

## Description

### FIELD OF THE INVENTION

The present invention relates to modified asphalt compositions. The present invention particularly relates to polymer-modified asphalt compositions comprising ethylene copolymers, styrene butadiene copolymers and wax.

### BACKGROUND OF THE INVENTION

Asphalt is material obtained from the distillation bottoms of petroleum product and is used extensively for paving roads, highways, parking lots, playgrounds, and other areas where smooth passage of pedestrian or vehicular traffic is desirable. Asphalt is generally blended with rock to obtain a composite paving composition that is used for paving. While rock is typically the major portion of the paving composition, generally as much as 95 wt.% of the composition, the asphalt provides important properties to the mixture.

Asphalt can be considered as an adhesive or binder composition that serves the purpose of holding the rock together. At the same time, asphalt provides elasticity so that the pavement can regain its original shape after deformation under the weight of traffic. While elasticity is an important property imparted by the asphalt, the asphalt should not be so elastic that the pavement loses stiffness.

Asphalt can be modified with polymers to improve certain properties, including rut resistance, fatigue resistance and cracking resistance. The presence of the modifying polymer can also improve stripping resistance (from aggregate) in paving. These improvements result from increases in asphalt elasticity and stiffness and both improvements can be the result of polymer addition.

A set of specifications developed by the federal government (Strategic Highway Research Program or SHARP) is used in grading performance of asphalt. For example, a PG58-34 asphalt should provide good rut resistance at 58°C and good cold cracking resistance at -34°C. The asphalt is considered a PG 58 grade. Addition of polymer to asphalt significantly increases the higher number (i.e. provides higher temperature rut resistance) and significantly improves fatigue resistance. The improvements in rut and fatigue resistance result from increases in stiffness and elasticity. These increases are effected by the addition of relatively small amounts of polymer, generally 1 to 5 wt.%. Elasticity of asphalt is determined by measuring the phase angle using a dynamic shear rheometer and measuring elastic recovery. Asphalt stiffness is measured using a dynamic shear rheometer (DSR). Details of the test are described in TP5 of AASHTO (American Association of State Highway Transportation Officials). The actual measurement used is G*/sin d, which is the complex modulus divided by the phase angle. The value of G*/sin d is 1 or higher at 58°C for a PG 58 grade asphalt. Asphalts are graded in 6°C increments, for example PG58, PG64, PG70, and PG76. The value G*/sin d for a given PG grade can exceed 1. For example a PG 58 asphalt might have a value of 1.5 at 58°C, but it is still a PG 58 grade until the value of G*/sin d is measured to be 1 at 64°C. If such were the case, the asphalt would then be classified as a PG 64 asphalt. Occasionally PG values are reported as pass/fail. An example of this would be a PG 58 asphalt with a G*/sin d value of 1.5. It might be reported as a PG pass/fail of 59.9. Elastic recovery (ER) is measured using a ductilometer. A "dogbone" sample of the asphalt is elongated to 10 cm, cut in the center and the % recovery after one hour determined. The test is normally conducted at 25°C according to the provisions of ASTM D6084.

A wide variety of ethylene alkyl ester copolymers are known as modifiers for asphalt. German patent 1,644,771 discloses and claims bitumen compositions made up of from 5 to 95 wt.% aromatic petroleum asphalt and from 95 to 5 wt.% of an ethylene/acrylate ester copolymer. The copolymer fraction is either an ethylene/alkyl acrylate or ethylene/alkyl methacrylate copolymer derived from copolymerization of ethylene and from 1 to 40 wt.% of alkyl acrylate or alkyl methacrylate ester, wherein the alkyl groups contain from 1 to 8 carbon atoms.

In U. S. Pat. Nos. 5,306,700 and 5,556,900 compositions useful in road paving and roofing applications are disclosed that include a reactive polymeric asphalt additive that chemically reacts with and links to the asphalt as a result of the presence of an epoxy functional group. The reactive polymer additive is an ethylene copolymer of the general formula E/X/Y/Z where E represents the ethylene derived units and constitutes from 20 to 99.5 wt.% of the copolymer. The X comonomer can be present in amounts of up to 50 wt.% and is, for example, an alkyl acrylate, alkyl methacrylate, vinyl ester or alkyl vinyl ether. The Y comonomer is present in amounts of from 0.5 to 15 wt.% and is, for example, glycidyl acrylate, glycidyl methacrylate or glycidyl vinyl ether. The Z comonomer is optionally present in amounts of up to 15 wt.% and is a monomer such as carbon monoxide, sulfur dioxide, acrylonitrile and the like. Of particular note is the reactive terpolymer ethylene/n-butyl acrylate/glycidyl methacrylate (EnBAGMA), which is known (after chemical linking to the asphalt) to significantly improve both elasticity and stiffness of the resulting modified asphalt product.

In U.S. Pat. Nos. 6,117,926 and 6,399,680 improved polymer-modified asphalt compositions are taught wherein an asphalt and a stiffness-enhancing copolymer having available epoxy groups are reacted in the presence of an effective amount of an acid (e.g., H₃PO₄ and H₂SO₄) to promote chemical bonding between the asphalt and the available epoxy groups of the copolymer. The use of the acid is shown to minimize the amount of epoxy functionalized polymer additive required to achieve greater stiffness values. The references also disclose that asphalt compositions having good low temperature performance are attained by the addition of processing oils. Additionally, ethylene copolymers including ethylene vinyl acetate, ethylene methyl acrylate, ethylene n-butyl acrylate, and ethylene ethyl acrylate copolymers may be blended with the polymers. In U.S. Pat. Nos. 6,011,095 and 6,414,056 the specific use of polyphosphoric acid (PPA) and/or superphosphoric acid (SPA) as the acid adjuvant in the promotion of the chemical bonding between asphalt and the available epoxy groups of ethylene/methyl acrylate/glycidyl methacrylate terpolymer (EMAGMA) and ethylene/n-butyl acrylate/glycidyl methacrylate terpolymer (EnBAGMA) are exemplified, respectively.

Polymers typically will not have a pronounced effect on low temperature properties of asphalt. Good low temperature properties for asphalt are generally obtained by addition of oils such as gas oil. Plastomers such as polyethylene generally have an adverse effect on the low temperature properties of asphalt. In contrast, elastomers are generally considered to be desirable additives for asphalt. For a variety of reasons, the word "plastomer" has come to have a negative connotation in the asphalt industry, and to indicate a lack of elastomeric properties. Plastomers have occasionally been used to modify asphalt because they can increase stiffness and viscosity and thereby improve rut resistance. However, they are generally considered inferior additives compared to elastomers due to lack of significant improvements in asphalt fatigue resistance, creep resistance and cold crack resistance when plastomers are used.

As described above, ethylene/n-butyl acrylate/glycidyl methacrylate terpolymer (EnBAGMA) can be used for asphalt modification. EnBAGMA imparts significant elastomeric properties after it has reacted with the asphalt and is considered an elastomer. EnBAGMA (commercially available from E.I. du Pont de Nemours and Company under the tradename of Elvaloy® RET) is an excellent modifier for asphalt and significantly improves asphalt performance at low concentrations (1 wt.% to 2 wt.%).

Ethylene acrylates sold commercially by DuPont under the tradename of Elvaloy® AC, and blends of Efvaloy® AC with Elvaloy® RET, have been useful as elastomeric resins for asphalt modification. Tubular ethylene acrylates have also surprisingly been found to impart good elastomeric properties to asphalt, while autoclave-produced ethylene acrylates behave as less desirable plastomers.

Styrene-butadiene-styrene (SBS) block copolymers are useful elastomers for asphalt modification, and have gained wide acceptance for use in polymer-modified asphalt compositions.

Although asphalts modified with the above-described materials have desirable elastomeric properties, their use is not optimal under all environmental conditions. A need exists for a variety of alternative modified asphalts having a combination of desirable properties and which may be produced economically.

### SUMMARY OF THE INVENTION

In one aspect, the present invention is a composition useful as an asphalt modifier comprising an elastomer and a low molecular weight plastomer having a weight average molecular weight of less than 7000, wherein the elastomer is a blend comprising (i) a first elastomer selected from the group consisting of ethylene/n-butyl acrylate/glycidyl methacrylate terpolymers, ethylene alkyl acrylate copolymers obtained by a tubular reactor process and mixtures thereof; and (ii) a second elastomer selected from the group consisting of styrene butadiene styrene block copolymers, styrene butadiene random copolymers and mixtures thereof.

In another aspect, the present invention is an asphalt composition comprising an un-modified asphalt, an elastomer and a low molecular weight plastomer having a weight average molecular weight of less than 7000, wherein the elastomer is a blend comprising (i) a first elastomer selected from the group consisting of ethylene/n-butyl acrylate/glycidyl methacrylate terpolymers, ethylene alkyl acrylate copolymer obtained by a tubular reactor process and mixtures thereof and (ii) a second elastomer selected from the group consisting of styrene butadiene styrene block copolymers, styrene butadiene random copolymers and mixtures thereof.

In another aspect, the present invention is a pavement comprising an asphalt composition wherein the asphalt composition comprises an un-modified asphalt, an elastomer and a low molecular weight plastomer having a weight average molecular weight of less than 7000, wherein the elastomer is a blend comprising (i) a first elastomer selected from the group consisting of ethylene/n-butyl acrylate/glycidyl methacrylate terpolymers, ethylene alkyl acrylate copolymers obtained by a tubular reactor process and mixtures thereof; and (ii) a second elastomer selected from the group consisting of styrene butadiene styrene block copolymers, styrene butadiene random copolymers and mixtures thereof.

In still another aspect, the present invention is a process for modifying an asphalt composition comprising the step of blending (i) a composition comprising an elastomer and a low molecular weight plastomer having a weight average molecular weight of less than 7000 with (ii) an un-modified asphalt, wherein the elastomer is a blend comprising (i) a first elastomer selected from the group consisting of ethylene/n-butyl acrylate/glycidyl methacrylate terpolymers, ethylene alkyl acrylate copolymers obtained by a tubular reactor process and mixtures thereof; and (ii) a second elastomer selected from the group consisting of styrene butadiene styrene block copolymers, styrene butadiene random copolymers and mixtures thereof.

### DETAILED DESCRIPTION OF THE INVENTION

In one embodiment, the present invention is a composition comprising an elastomer blend and a plastomer, wherein the elastomer blend/plastomer composition can be useful in an asphalt composition. To determine whether the elastomer blend/plastomer composition is suitable for use in an asphalt composition, the composition can be graded using the SHRP specifications to determine whether the asphalt would provide suitable properties in a pavement. For example, a suitable composition should provide acceptable rut resistance at 58°C and good cold cracking resistance at -34°C. At the same time, a suitable composition should provide acceptable fatigue resistance.

The elastomer blend is a mixture comprising two elastomer components. The first elastomer component includes certain copolymers of ethylene and alkyl acrylates. For example, alkyl acrylates that are esters of acrylic acid and C₁ to C₁₀ alcohols are suitable as comonomers. These include alkyl acrylates such as n-butyl acrylate, ethyl acrylate, and methyl acrylate, which can easily be copolymerized with ethylene to provide the ethylene alkyl acrylate copolymers useful herein. Ethylene/n-butyl acrylate/glycidyl methacrylate terpolymers (EnBAGMA) are preferred. Ethylene alkyl acrylate copolymers sold commercially by E.I. du Pont de Nemours and Company (DuPont) under the tradename of Elvaloy® AC, and blends of Elvaloy® AC with Elvaloy® RET, can also be useful in the practice of the present invention. Such copolymers are produced by high pressure free radical copolymerization processes. Additionally, tubular ethylene alkyl acrylate copolymers can be useful in the practice of the present invention.

The tubular reactor produced ethylene/alkyl acrylate copolymers useful in the present invention are ethylene copolymers derived from the copolymerization of ethylene monomer and at least one additional alkyl acrylate or alkyl methacrylate comonomer, wherein the alkyl group contains from 1 to 8 carbon atoms. Such polymers are described in pending U.S. Patent Application 10/806559. More specifically, the tubular reactor produced ethylene/alkyl acrylate copolymers are distinguished from a more conventional autoclave produced ethylene/alkyl acrylate. Thus, the term or phrase "tubular reactor produced" ethylene /alkyl acrylate copolymer, for purposes of this invention, denotes an ethylene copolymer produced at high pressure and elevated temperature in a tubular reactor or the like, wherein the inherent consequences of dissimilar reaction kinetics for the respective ethylene and alkyl acrylate comonomers are alleviated or partially compensated by the intentional introduction of the monomers along the reaction flow path within the tubular reactor. As generally recognized in the art, such a tubular reactor copolymerization technique will produce a copolymer having a greater relative degree of heterogeneity along the polymer backbone (a more random distribution of comonomers), will tend to reduce the presence of long chain branching and will produce a copolymer characterized by a higher melting point than one produces at the same comonomer ratio in a high pressure stirred autoclave reactor.

Tubular reactor and autoclave processes are described in, e.g., "High Flexibility EMA Made From High Pressure Tubular Process", Annual Technical Conference - Society of Plastics Engineers (2002), 60, vol. 2, 1832-1836.

As discussed above, epoxy functionalized ethylene copolymers, such as EnBAGMA, useful in the present invention and methods of employing the same, are known. These include, for example, copolymers and methods of use disclosed and taught in U.S. Pat. Nos. 5,306,750; 5,556,900; 6,011,095; 6,117,926; 6,414,056 and 6,399,680. The significant improvement in asphalt properties that occurs with addition of the epoxy functionalized ethylene copolymers (e.g., EnBAGMA) in these prior compositions is believed due to a chemical reaction between the reactive copolymer additive and the functionalized polar fraction of asphalt referred to as asphaltenes. Acids, specifically superphosphoric acid (SPA) are currently used to enhance the performance of the epoxy functionalized ethylene copolymer when added to asphalt. Some improvements in asphalt properties can be obtained when epoxy containing reactive polymer additive is used without the addition of SPA, however the mixing time is very long (24+ hours vs. 3-6 hours with SPA) and the final asphalt properties are poorer. Thus, chemical bonding of the reactive epoxy functionalized ethylene copolymer to the asphalt produces a polymer-modified asphalt typically exhibiting one or more improved properties such as: improved dynamic shear rheometer stiffness values without appreciable loss in the G* viscous component of the complex modulus; improved low temperature creep stiffness and "m" value; higher temperature stiffness values for the ratio of the complex G* to the sine of the phase angle, (G*)/(sin δ), at 10 radian/sec; improved low phase angle and elastic recovery at 25°C or the like.

Although the use of these ethylene copolymers as asphalt modifiers is known, it has now been found that the combination of the polymers with a) SBS block copolymers or SB random copolymers and b) certain plastomers provides an asphalt modifier that has valuable properties when added to un-modified asphalt. By "un-modified asphalt" is meant that the asphalt does not contain acids or sodium hydroxide as additives. An example of an un-modified asphalt is an Ardmore PG 58-28 un-modified grade produced at the Ardmore, Okla, refinery of Valero Inc.

The second elastomer component of the elastomer blend includes polymers selected from the group consisting of styrene butadiene styrene (SBS) block copolymers, SBS random copolymers and mixtures of these polymers. The SBS block copolymers and SB random copolymers that are suitable for use in the compositions of the invention are well-known products that are commercially available. They comprise repeat units derived from styrene and an aliphatic diene monomer. The "B" segment of the SBS block polymer is a polymerized butadiene segment which can be a polymerized conjugated diene having 4-6 carbons atoms such as 1,3-butadiene, isoprene, 2-ethyl-1,3-butadiene, 2,3-dimethyl-1,3-butadiene and piperylene. The "S" segment of the block copolymer is a monovinyl aromatic polysegment. Examples of such segments are polymerzied styrene, α-methylstyrene, p-vinyltoluene, m-vinyltoluene, o-vinyltoluene, 4-ethylstyrene, 3-ethylstyrene, 2-ethylstyrene, 4-tert-butylstyrene and 2,4-dimethylstyrene. SBS block copolymers are tri-block polymers having a polystyrene segment at the ends of the polymer molecule and an elastomeric segment, the conjugated butadiene segment, being in the center of the block polymer molecules. SBS copolymers are available commercially from, e.g., Kraton Polymers L.L.C., Polimeri Europa and BASF Corporation.

SB is a random copolymer (also known as SBR) comprising repeat units derived from styrene and butadiene in which the styrene and butadiene units are randomly dispersed in the polymer molecule.

SB and SBS can be produced by anionic polymerization. For example, random SB can be made in a solution process. Both SBS block copolymers and SB random copolymers are commercially available from, e.g., Dutch State Mines, N.V. , Sartomer Company, Inc. and Goodyear Tire and Rubber Co. Diblock SB can also be used in this invention. The preferred wt.% range of polystyrene units in the copolymer may range from about 10 to about 50, preferably about 20 to 40%. This is also the preferred range for the SBS copolymers suitable for use in the compositions of the invention. These diblock and triblock copolymers based on styrene and butadiene can be prepared by conventional procedures such as those described in U.S. Patent 3,281,383 and U.S. Patent 3,639,521.

The second elastomer component, i.e. the SBS block copolymer or SBS random copolymer, or mixtures thereof, can be included in the elastomer blend in amounts of from about 0.025 wt.% to about 99 wt.%, based on the total weight of the blend (i.e. based on the total weight of the first and second elastomer components). Preferably 25 wt.% - 75 wt.% of the second elastomer, based on the total weight of the elastomer blend composition will be used.

Suitable plastomers for use in preparing the asphalt modifier compositions of the invention are low molecular weight polymeric or oligomeric waxes, such as polyolefin waxes, preferably polyethylene waxes. By low molecular weight is meant a weight average molecular weight of less than 7,000. Mixtures of plastomers are also suitable for use in the practice of the present invention. One preferable plastomer of note is a polyethylene wax that is a Fischer Tropsch wax supplied by Sasol Americas, Inc. under the tradename Sasobit®. Plastomers can be included in an amount of from about 0.01 to about 99.99 wt.% based on the total weight of the asphalt modifier composition. Preferably, however, from about 1 wt.% to about 10 wt.% will be used. Most preferably, from about 1 wt.% to about 5 wt.% will be used.

Benefits provided by the blending of the asphalt modifiers of the invention with asphalt are that an acceptable performance grade (PG) can be obtained using less of the more expensive elastomeric composition; there is a significant reduction in viscosity of the resultant modified asphalt; faster dissolution of the modifying polymers in asphalt occurs, which can decrease cycle time; the stick temperature of the elastomer is raised when melt blended; and a mode of increasing R&B softening temperatures of elastomers modified asphalt is provided.

The modifier composition of the invention, comprising an elastomer blend and plastomer as described above, can be present in the asphalt in any effective amount, keeping the cost of materials in mind as a relevant factor. It is preferable that the modifier (i.e. the combination of a) elastomer selected from the group consisting of ethylene/n-butyl acrylate/glycidyl methacrylate terpolymers, ethylene alkyl acrylate copolymers obtained by a tubular reactor process and mixtures thereof, b) styrene butadiene styrene block copolymers, styrene butadiene random copolymers and mixtures thereof and c) plastomer) is present in the asphalt composition in an amount of from about 0.01 wt.% to about 25 wt.%, based on the total weight of the asphalt composition, preferably from about 1 wt.% to about 5 wt.%.

The asphalt modifier composition of the invention is used as an additive for un-modified asphalt. Any such un-modified (where unmodified is as herein defined) asphalt or bitumen material generally acknowledged as and/or used in road paving surfaces and similar roadway applications is suitable. As such, the terms asphalt and bitumen should be considered equivalent for purposes of this invention. Generally any natural occurring and/or synthetically manufactured asphalt or bitumen is suitable. Naturally occurring asphalts include by way of example but are not limited to such materials derived from native rock asphalt, lake asphalt, and the like. Synthetically manufactured asphalts typically include asphaltic by-products of petroleum refining operations and include air-blown asphalt, propane asphalt, straight-run asphalt, thermal asphalt and the like.

It should be appreciated that the use of other asphalt additives as generally practiced in the asphalt road-surface paving applications may be optionally added as components of the polymer-modified asphalt compositions of the present invention. Thus, the obvious use of aggregate with the polymer-modified asphalt of the invetion is contemplated. Also, the incorporation of an antistrip agent including those traditionally based on amine chemistry is also contemplated. Further, additional elastomers, other than those that constitute the first and second elastomers of the asphalt modifier of the invention, may be added.

In addition, the composition can further optionally include a sulfur source such as elemental sulfur, a sulfur donor, a sulfur byproduct, or combinations of two or more thereof. A sulfur donor generates sulfur *in-situ* when included in the composition. Examples of sulfur donors include sodium diethyldithiocarbamate, 2,2-dithiobis(benzothiazole), mercaptobenzothiazole, dipentamethylenethiuram tetrasulfide, or combinations of two or more thereof and include Sasolink^{®} TXS (a proprietary product available from Sasol Wax Americas, Shelton, CN, USA). A sulfur byproduct can include one or more sulfides, sulfoxides, sulfones, or combinations of two or more thereof.

The method and sequence of steps employed to produce the composition comprising un-modified asphalt and the asphalt modifier composition of the invention can be by any of the methods and equipment as generally described in the prior art. However, as a practical consideration, the addition of the asphalt modifier composition and the blending with the un-modified asphalt is most preferred particularly in conjunction with an already hot asphalt isolated/produced during an oil refining operations.

The composition can be produced by, for example, combining the asphalt, ethylene copolymer, styrene/butadiene copolymer and plastomer in a mixer by dry blending or by the conventional masterbatch technique, or the like. The combinations can be subject to a condition including heating to a range of about 150° to about 250°C, or about 170° to 225°C, or to molten stage in any suitable vessel such as a mixing tank or a reactor or a metal can. An aromatic flux oil can also be added to the asphalt to produce a softer asphalt. The ethylene copolymers, styrene/butadiene copolymer and plastomer, in any physical form, such as pellets, can be added to the molten asphalt to produce a molten mixture.

The molten mixture can be heated at about 150° to about 250°C, or about 170° to 225°C under a pressure that can accommodate the temperature range, such as atmospheric pressure, for about 1 to about 35 hours, preferably about 2 to about 30 hours, more preferably about 5 to about 25 hours.

The molten mixture can be mixed by, for example, a mechanical agitator or any other mixing means.

Polymer-modified asphalts are normally produced in a high shear mill process, or in a low shear mixing process, as is well known to one skilled in the art. The process used is dependent on the equipment available and on the polymers used. Polymers that can be used in low shear mixing equipment can usually be processed in high shear equipment also. Either type of equipment can be used with this invention. A solvent may or may not be used to disperse polymers that are typically processed in high shear equipment into asphalt using low shear mixing equipment. A good description of the methods by which polymeric asphalt modifiers can be produced commercially can be found in publication IS-200, Asphalt Institute, Lexington, KY.

The modified asphalt compositions of the invention are useful as pavements, for example as road and driveway paving material.

### Examples

### Example 1

A series of polymer-modified asphalt compositions of the invention was prepared by blending the elastomers and plastomers in the amounts shown in Table I with the asphalts shown. A total of 500 grams of each of the compositions (i.e. total weight of asphalt, elastomers and plastomer) were blended in 1000 ml open metal cans for 3 hours at 190°C. Mixing was carried out with a conventional 3-paddle air driven mixer. The compositions were then tested to determine properties important to asphalt. Results are shown in Table I and illustrate improved stiffness and improved elasticity in comparison to the unmodified asphalt. The unmodified asphalt has a phase angle of ~87 degrees and elastic recovery of less than 10%. The compositions of the invention also exhibit lower viscosity vs. a modified asphalt not containing the low molecular weight plastomer. The Brookfield viscosity of modified asphalt not containing the plastomer is ~ 3000 cps. A description of the properties reported in Table I is found in the Detailed Description of the Invention above and ASTM D 6084 and TP5, available from American Association of State Highway Officials.

**Table I**

| Composition | Amount (wt.%) | sin d (original) PG Grade | G*/sin d (RTFO) PG Grade | G*/sin d (original) Pass/Fail (=1.0 Mpa) | G*/sin d (RTFO) Pass/Fail (=2. 2 Mpa) | Phase Angle (original) | Phase Angle (RTFO) | ER, 10°C | ER, 25°C | Brookfield Viscosity, (cps@135°C) |
|---|---|---|---|---|---|---|---|---|---|---|
| Ultramar 58-28 Asphalt¹ | 96.42 | 70 | | 75.9 | | 70.8 | | 59 | | 1310 |
| SBR² | 1.0 | | | | | | | | | |
| E/nBA³ | 2.25 | | | | | | | | | |
| Sulfur | 0.08 | | | | | | | | | |
| Fischer Tropsch wax⁴ | 0.25 | | | | | | | | | |
| Ultramar 58-28 Asphalt | 96.92 | 70 | | 75.2 | | 68.8 | | 62 | | 1680 |
| SBR | 1.0 | | | | | | | | | |
| E/nBA | 1.26 | | | | | | | | | |
| EnBAGMA⁵ | 0.54 | | | | | | | | | |
| Sulfur | 0.08 | | | | | | | | | |
| Fischer Tropsch wax | 0.20 | | | | | | | | | |
| Ultramar 58-28 Asphalt | 97.17 | 70 | | 74.2 | | 71 | | 65 | | 1380 |
| SBR | 1.0 | | | | | | | | | |
| EnBAGMA⁶ | 1.575 | | | | | | | | | |
| Sulfur | 0.08 | | | | | | | | | |
| Fisher-Tropsch wax | 0.175 | | | | | | | | | |
| Ardmore 58-28 Asphalt' | 97.42 | 70 | 75.3 | 70 | 75.9 | 69.1 | 63.3 | | 82.5 | |
| SBS⁸ | 1.0 | | | | | | | | | |
| EnBAGMA⁹ | 1.35 | | | | | | | | | |
| Sulfur | 0.08 | | | | | | | | | |
| Fischer-Tropsch wax | 0.15 | | | | | | | | | |
| Ardmore 58-28 Asphalt | 96.42 | 76 | 78.8 | 76 | 77.4 | 59.5 | 56.2 | | 90 | |
| SBS | 2.0 | | | | | | | | | |
| EnBAGMA⁹ | 1.35 | | | | | | | | | |
| Sulfur | 0.08 | | | | | | | | | |
| Fischer Tropsch wax | 0.15 | | | | | | | | | |
| Ardmore 58-28 Asphalt | 97.27 | 70 | 74.3 | 76 | 76.1 | 81.6 | 76.3 | | 40 | |
| SBS | 1.0 | | | | | | | | | |
| EnBAGMA⁶ | 1.35 | | | | | | | | | |
| Sulfur | 0.08 | | | | | | | | | |
| Fischer Tropsch wax | 0.30 | | | | | | | | | |
| Ardmore 58-28 Asphalt | 96.27 | 76 | 76.8 | 76 | 78.2 | 76.9 | 70.7 | | 57.5 | |
| SBS | 2.0 | | | | | | | | | |
| EnBAGMA⁶ | 1.35 | | | | | | | | | |
| Sulfur | 0.08 | | | | | | | | | |
| Fischer Tropsch wax | 0.30 | | | | | | | | | |
| Ardmore 58-28 Asphalt | 97.39 | 70 | 73.9 | 70 | 75 | 76.4 | 69.6 | | 71.3 | |
| SBS | 1.0 | | | | | | | | | |
| EnBAGMA⁹ | 0.69 | | | | | | | | | |
| E/nBA | 0.69 | | | | | | | | | |
| Sulfur | 0.08 | | | | | | | | | |
| Fischer Tropsch wax | 0.15 | | | | | | | | | |
| Ardmore 58-28 Asphalt | 96.39 | 76 | 77 | 76 | 76.8 | 68.5 | 63.5 | | 82.5 | |
| SBS | 2.0 | | | | | | | | | |
| EnBAGMA⁹ | 0.69 | | | | | | | | | |
| E/nBA | 0.69 | | | | | | | | | |
| Sulfur | 0.08 | | | | | | | | | |
| Fischer Tropsch wax | 0.15 | | | | | | | | | |

| | | | | | | | | | | |
|---|---|---|---|---|---|---|---|---|---|---|
| ¹Ultramar 58-28 asphalt produced at Ardmore Oklahoma refinery, Valero, Inc. ²Styrene butadiene random copolymer, 2029, available from DSM, N.V. ³Copolymer of ethylene and n-butyl acrylate, weight ratio 65:35, prepared by tubular reactor process. ⁴ Sasobit® polyethylene wax, m.p. 105°C, available from Sasol Americas, Inc. ⁵ Copolymer of ethylene, n-butyl acrylate and glycidyl methacrylate, weight ratio 66:22:12. ⁶ Copolymer of ethylene, n-butyl acrylate and glycidyl methacrylate, weight ratio 66.5:28:5.5. ⁷ Ardmore 58-28 asphalt produced at Ardmore Oklahoma refinery, Valero, Inc. ⁸ SBS block copolymer, 30 wt.% styrene, M_{w} 400,000. ⁹ Copolymer of ethylene, n-butyl acrylate and glycidyl methacrylate, weight ratio 66:25:9. | | | | | | | | | | |

## Claims

1. A composition useful as an asphalt modifier comprising an elastomer and a low molecular weight plastomer having a weight average molecular weight of less than 7000, wherein the elastomer is a blend comprising (i) a first elastomer selected from the group consisting of ethylene/n-butyl acrylate/glycidyl methacrylate terpolymers, ethylene alkyl acrylate copolymers obtained by a tubular reactor process, and mixtures thereof and (ii) a second elastomer selected from the group consisting of styrene butadiene styrene block copolymers, styrene butadiene random copolymers and mixtures thereof.

2. A composition of Claim 1 wherein said first elastomer is an ethylene/n-butyl acrylate/glycidyl methacrylate terpolymer.

3. A composition of Claim 1 wherein said first elastomer is an ethylene alkyl acrylate copolymer obtained by a tubular reactor process.

4. A composition of Claim 1 wherein said second elastomer is a styrene butadiene styrene block copolymer.

5. A composition of Claim 1 where said second elastomer is a styrene butadiene random copolymer.

6. A composition of Claim 1 wherein said plastomer is a polyolefin wax.

7. A composition of Claim 6 wherein said polyolefin wax is a polyethylene wax.

8. A composition of Claim 1 wherein said plastomer is present in the composition in an amount of from about 1 to about 5 wt. % based on the total weight of the composition.

9. A composition of Claim 1 wherein said second elastomer is present in said blend in an amount of from about 25 wt.% to about 75 wt.%, based on the total weight of said blend.

10. An asphalt composition comprising an un-modified asphalt, an elastomer and a low molecular weight plastomer having a weight average molecular weight of less than 7000, wherein the elastomer is a blend comprising (i) a first elastomer selected from the group consisting of ethylene/n-butyl acrylate/glycidyl methacrylate terpolymers, ethylene alkyl acrylate copolymer obtained by a tubular reactor process, and mixtures thereof and (ii) a second elastomer selected from the group consisting of styrene butadiene styrene block copolymers, styrene butadiene random copolymers and mixtures thereof.

11. An asphalt composition of Claim 10 wherein said elastomer and low molecular weight plastomer composition are present in the asphalt composition in an amount of from about 0.01 wt.% to about 25 wt.%, based on the total weight of said asphalt composition.

12. A pavement comprising an asphalt composition comprising an un-modified asphalt, an elastomer and a low molecular weight plastomer having a weight average molecular weight of less than 7000, wherein the elastomer is a blend comprising (i) a first elastomer selected from the group consisting of ethylene/n-butyl acrylate/glycidyl methacrylate terpolymers, ethylene alkyl acrylate copolymer obtained by a tubular reactor process and mixtures thereof and (ii) a second elastomer selected from the group consisting of styrene butadiene styrene block copolymers, styrene butadiene random copolymers and mixtures thereof.

13. A process for modifying an asphalt composition comprising the step of blending (i) a composition comprising an elastomer and a low molecular weight plastomer having a weight average molecular weight of less than 7000 with (ii) an un-modified asphalt, wherein the elastomer is a blend comprising (i) a first elastomer selected from the group consisting of ethylene/n-butyl acrylate/glycidyl methacrylate terpolymers, ethylene alkyl acrylate copolymers obtained by a tubular reactor process and mixtures thereof; and (ii) a second elastomer selected from the group consisting of styrene butadiene styrene block copolymers, styrene butadiene random copolymers and mixtures thereof.

## Patentansprüche

1. Zusammensetzung, verwendbar als ein Modifikationsmittel für Asphalt, aufweisend ein Elastomer und ein niedermolekulares Plastomer mit einer massegemittelten Molekülmasse von weniger als 7000, wobei das Elastomer ein Blend ist, welches aufweist: (i) ein erstes Elastomer, das ausgewählt ist aus der Gruppe, bestehend aus Ethylen/n-Butylacrylat/Glycidylmethacrylat-Terpolymeren; Ethylen/Alkylacrylat-Copolymeren, die mit Hilfe eines Röhrenreaktorprozesses erhalten werden, sowie Mischungen davon und (ii) ein zweites Elastomer, das ausgewählt ist aus der Gruppe, bestehend aus Styrol/Butadien/Styrol-Blockcopolymeren, Styrol/Butadien-Random-Copolymeren sowie Mischungen davon.

2. Zusammensetzung nach Anspruch 1, wobei das erste Elastomer ein Ethylen/n-Butylacrylat/Glycidylmethacrylat-Terpolymer ist.

3. Zusammensetzung nach Anspruch 1, wobei das erste Elastomer ein Ethylen/Alkylacrylat-Copolymeren ist, das mit Hilfe eines Röhrenreaktorprozesses erhalten wird

4. Zusammensetzung nach Anspruch 1, wobei das zweite Elastomer ein Styrol/Butadien/Styrol-Blockcopolymer ist.

5. Zusammensetzung nach Anspruch 1, wobei das zweite Elastomer ein Styrol/Butadien/Styrol-Random-Copolymer ist.

6. Zusammensetzung nach Anspruch 1, wobei das Plastomer ein Polyolefinwachs ist.

7. Zusammensetzung nach Anspruch 6, wobei das Polyolefinwachs ein Polyethylenwachs ist.

8. Zusammensetzung nach Anspruch 1, wobei das Plastomer in der Zusammensetzung in einer Menge von etwa 1% bis etwa 5 Gew.%, bezogen auf das Gesamtgewicht der Zusammensetzung vorliegt.

9. Zusammensetzung nach Anspruch 1, wobei das zweite Elastomer in dem Blend in einer Menge von etwa 25% bis etwa 75 Gew.%, bezogen auf das Gesamtgewicht des Blends vorliegt.

10. Asphaltzusammensetzung, aufweisend einen nichtmodifizierten Asphalt, ein Elastomer und ein niedermolekulares Plastomer mit einer massegemittelten Molekülmasse von weniger als 7000, wobei das Elastomer ein Blend ist, welches aufweist: (i) ein erstes Elastomer, das ausgewählt ist aus der Gruppe, bestehend aus Ethylen/n-Butylacrylat/Glycidylmethacrylat-Terpolymeren; Ethylen/Alkylacrylat-Copolymer, das mit Hilfe eines Röhrenreaktorprozesses erhalten wird, sowie Mischungen davon und (ii) ein zweites Elastomer, das ausgewählt ist aus der Gruppe, bestehend aus Styrol/Butadien/Styrol-Blockcopolymeren, Styrol/Butadien-Random-Copolymeren sowie Mischungen davon.

11. Asphaltzusammensetzung nach Anspruch 10, wobei die Zusammensetzung von Elastomer und niedermolekularem Plastomer in der Asphaltzusammensetzung in einer Menge von etwa 0,01% bis etwa 25 Gew.%, bezogen auf das Gesamtgewicht der Asphaltzusammensetzung vorliegen.

12. Fahrbahnoberbau mit einer Asphaltzusammensetzung, welche aufweist: ein Elastomer und ein niedermolekulares Plastomer mit einer massegemittelten Molekülmasse von weniger als 7000, wobei das Elastomer ein Blend ist, welches aufweist: (i) ein erstes Elastomer, das ausgewählt ist aus der Gruppe, bestehend aus Ethylen/n-Butylacrylat/Glycidylmethacrylat-Terpolymeren; Ethylen/Alkylacrylat-Copolymer, das mit Hilfe eines Röhrenreaktorprozesses erhalten wird, sowie Mischungen davon und (ii) ein zweites Elastomer, das ausgewählt ist aus der Gruppe, bestehend aus Styrol/Butadien/Styrol-Blockcopolymeren, Styrol/Butadien-Random-Copolymeren sowie Mischungen davon.

13. Verfahren zum Modifizieren einer Asphaltzusammensetzung, umfassend den Schritt des Compoundierens (i) einer Zusammensetzung, die ein Elastomer aufweist und ein niedermolekulares Plastomer mit einer massegemittelten Molekülmasse von weniger als 7000 mit (ii) einem nichtmodifizierten Asphalt, wobei das Elastomer ein Blend ist aus: (i) einem ersten Elastomer, das ausgewählt ist aus der Gruppe, bestehend aus Ethylen/n-Butylacrylat/Glycidylmethacrylat-Terpolymeren; Ethylen/Alkylacrylat-Copolymeren, die mit Hilfe eines Röhrenreaktorprozesses erhalten werden, sowie Mischungen davon und (ii) einem zweiten Elastomer, das ausgewählt ist aus der Gruppe, bestehend aus Styrol/Butadien/Styrol-Blockcopolymeren, Styrol/Butadien-Random-Copolymeren sowie Mischungen davon.

## Revendications

1. Composition utilisable comme agent de modification de l'asphalte comprenant un élastomère et un plastomère de faible poids moléculaire ayant un poids moléculaire moyen en poids inférieur à 7000, dans laquelle l'élastomère est un mélange comprenant (i) un premier élastomère choisi parmi le groupe constitué des terpolymères d'éthylène/acrylate de *n*-butyle/méthacrylate de glycidyle, des copolymères d'éthylène-acrylate d'alkyle obtenus par un procédé par réacteur tubulaire et de mélanges de ceux-ci et (ii) un second élastomère choisi parmi le groupe constitué des copolymères séquencés de styrène-butadiène-styrène, des copolymères aléatoires de styrène-butadiène et des mélanges de ceux-ci.

2. Composition selon la revendication 1, dans laquelle ledit premier élastomère est un terpolymère d'éthylène/acrylate de *n*-butyle/méthacrylate de glycidyle.

3. Composition selon la revendication 1, dans laquelle ledit premier élastomère est un copolymère d'éthylène-acrylate d'alkyle obtenu à l'aide d'un procédé par réacteur tubulaire.

4. Composition selon la revendication 1, dans laquelle ledit second élastomère est un copolymère séquencé de styrène-butadiène-styrène.

5. Composition selon la revendication 1, dans laquelle ledit second élastomère est un copolymère aléatoire de styrène-butadiène.

6. Composition selon la revendication 1, dans laquelle ledit plastomère est une cire de type polyoléfine.

7. Composition selon la revendication 6, dans laquelle ladite cire de type polyoléfine est une cire de type polyéthylène.

8. Composition selon la revendication 1, dans laquelle ledit plastomère est présent dans la composition en une quantité d'environ 1 jusqu'à environ 5 % en pds basée sur le poids total de la composition.

9. Composition selon la revendication 1, dans laquelle ledit second élastomère est présent dans ledit mélange en une quantité d'environ 25 % en pds jusqu'à environ 75 % en pds, basée sur le poids total dudit mélange.

10. Composition d'asphalte comprenant un asphalte non modifié, un élastomère et un plastomère de faible poids moléculaire ayant un poids moléculaire moyen en poids inférieur à 7000, dans laquelle l'élastomère est un mélange comprenant (i) un premier élastomère choisi parmi le groupe constitué des terpolymères d'éthylène/acrylate de *n*-butyle/méthacrylate de glycidyle, de copolymères d'éthylène-acrylate d'alkyle obtenus par un procédé par réacteur tubulaire, et de mélanges de ceux-ci et (ii) un second élastomère choisi parmi le groupe constitué des copolymères séquencés de styrène-butadiène-styrène, des copolymères aléatoires de styrène-butadiène et de mélanges de ceux-ci.

11. Composition d'asphalte selon la revendication 10, dans laquelle ladite composition d'élastomère et de plastomère de faible poids moléculaire sont présents dans la composition d'asphalte en une quantité d'environ 0,01 % en pds jusqu'à environ 25 % en pds, basée sur le poids total de ladite composition d'asphalte.

12. Trottoir comprenant une composition d'asphalte comprenant un asphalte non modifié, un élastomère et un plastomère de faible poids moléculaire ayant un poids moléculaire moyen en poids inférieur à 7000, dans laquelle l'élastomère est un mélange comprenant (i) un premier élastomère choisi parmi le groupe constitué des terpolymères d'éthylène/acrylate de *n*-butyle/méthacrylate de glycidyle, de copolymères d'éthylène-acrylate d'alkyle obtenus par un procédé par réacteur tubulaire et de mélanges de ceux-ci et (ii) un second élastomère choisi parmi le groupe constitué des copolymères séquencés de styrène-butadiène-styrène, des copolymères aléatoires de styrène-butadiène et des mélanges de ceux-ci.

13. Procédé de modification d'une composition d'asphalte comprenant l'étape de mélange (i) d'une composition comprenant un élastomère et un plastomère de faible poids moléculaire ayant un poids moléculaire moyen en poids inférieur à 7000 avec (ii) un asphalte non modifié, dans lequel l'élastomère est un mélange comprenant (i) un premier élastomère choisi parmi le groupe constitué des terpolymères d'éthylène/acrylate de *n*-butyle/méthacrylate de glycidyle, des copolymères d'éthylène-acrylate d'alkyle obtenus par un procédé par réacteur tubulaire; et (ii) un second élastomère choisi parmi le groupe constitué des copolymères séquencés de styrène-butadiène-styrène, des copolymères aléatoires de styrène-butadiène et des mélanges de ceux-ci.
